# EUROPÄISCHE PATENTSCHRIFT

(11) **EP 4 413 866 B1**
(45) Veröffentlichungstag und Bekanntmachung des Hinweises auf die Patenterteilung: **07.10.2026**
(21) Anmeldenummer: 24156265.1
(22) Anmeldetag: 07.02.2024
(51) Int. Cl.: A23J 1/00, F26B 1/00

(54) **VERFAHREN ZUR VERWERTUNG VON TIERISCHEN NEBENPRODUKTEN**
METHOD FOR THE RECOVERY OF ANIMAL BY-PRODUCTS
PROCÉDÉ DE VALORISATION DE SOUS-PRODUITS ANIMAUX

(30) Priorität: 09.02.2023 DE 102023103111
(43) Veröffentlichungstag der Anmeldung: 14.08.2024
(73) Patentinhaber: SARVAL Fischermanns GmbH, 49201 Dissen (DE)
(72) Erfinder: Menzel-Fischermanns, Gregor, 41379 Brüggen (DE)
(74) Vertreter: Geskes, Christoph

(56) Entgegenhaltungen:
- EP-A2- 2 266 411
- CN-A- 112 206 904
- CN-U- 214 347 062
- DE-A1- 102021 101 934
- US-A- 4 361 590
- US-A- 6 131 741

## Beschreibung

Die vorliegende Erfindung betrifft ein Verfahren zur Verwertung von tierischen Nebenprodukten.

Die Verwertung von tierischen Nebenprodukten ist für die Landwirtschaft und die Lebensmittelindustrie von wirtschaftlichem Interesse. Aus tierischen Nebenprodukten können verschiedene Produkte hergestellt werden. So kann beispielsweise Tierfett an die chemische Industrie abgegeben und beispielsweise zu Schmierfett für technische Anwendungen oder zu Fettsäuremethylester (Biodiesel) oder SAF (sustainable Air fuel) verarbeitet werden. Gewonnene Tiermehle können beispielsweise als Zusatzbrennstoff in Kohlekraftwerken verwendet werden. Aus der Verwertung erhaltener Futterknochenschrot, also zerkleinerte, entfettete Knochen, dient in erster Linie als Mineralstoffträger und Futtermittel.

Bei den bekannten Verfahren zur Verwertung von tierischen Nebenprodukten stellt sich das Problem, dass bei der Zerkleinerung von Tierresten eine Trennung von Mineralien und Proteinen, die für die weitere Verarbeitung der Tierreste gewünscht ist, aufwändig und ineffizient erfolgt. DE102021101934 A1 offenbart ein Verfahren zur Verwertung von tierischen Nebenprodukten, das insbesondere die Schritte des Trocknens und Pressens einer proteinhaltigen Fraktion umfasst.

Aufgabe der vorliegenden Erfindung ist es, ein einfaches und effizientes Verfahren zur Verwertung von tierischen Nebenprodukten zur Verfügung zu stellen, die eine Anreicherung des Proteingehalts im Endprodukt ermöglicht.

Diese Aufgabe wird erfindungsgemäß gelöst durch ein Verfahren zur Verwertung von tierischen Nebenprodukten, in Form von Agglomeraten, wobei
- tierische Nebenprodukte getrocknet und gepresst werden, wobei Agglomerate gebildet werden,
- die Agglomerate mindestens durch Einbringung einer Vorspannungskraft und Aussetzung einer ersten Scherkraft zerkleinert werden,
- die zerkleinerten Agglomerate einer zweiten Scherkraft ausgesetzt werden.

Tierische Nebenprodukte in Sinne der vorliegenden Erfindung sind nahrungsmitteltaugliche tierische Nebenprodukte und/oder tierische Nebenprodukte der Kategorie 3. Tierische Nebenprodukte der Kategorie 3 sind gemäß VO (EG) 1774/2002:
- Schlachtkörperteile, die nach dem Gemeinschaftsrecht genusstauglich sind,
- Schlachtkörperteile, die als genussuntauglich abgelehnt werden, die jedoch keine Anzeichen einer auf Mensch oder Tier übertragbaren Krankheit zeigen (Konfiskat),
- Häute, Hufe und Hörner, Schweineborsten und Federn von Tieren, die nach einer Schlachttieruntersuchung zum menschlichen Verzehr geeignet sind,
- Blut von anderen Tieren als Wiederkäuern,
- tierische Nebenprodukte, die bei der Gewinnung von für den menschlichen Verzehr bestimmten Erzeugnissen angefallen sind,
- ehemalige Lebensmittel tierischen Ursprungs oder Erzeugnisse tierischen Ursprungs enthaltende ehemalige Lebensmittel,
- Rohmilch von Tieren, die keine klinischen Anzeichen einer über dieses Erzeugnis auf Mensch oder Tier übertragbaren Krankheit zeigen,
- Fische oder andere Meerestiere sowie deren Produkte,
- Schalen, Brütereinebenprodukte und Knickeiernebenprodukte,
- Blut, Häute, Hufe, Federn, Wolle, Hörner, Haare und Pelze von Tieren, die keine klinischen Anzeichen einer über diese Erzeugnisse auf Mensch oder Tier übertragbaren Krankheit zeigten.

Wird im Rahmen der Erfindung der Begriff "etwa" im Zusammenhang mit Werten oder Wertebereichen verwendet, so ist darunter ein Toleranzbereich zu verstehen, den der Fachmann auf diesem Gebiet für üblich erachtet. Insbesondere ist ein Toleranzbereich von ±20 %, bevorzugt von ±10 % und weiter bevorzugt von ±5 % vorgesehen. Soweit verschiedene Bereiche für Angaben und/oder für Definitionen in der vorliegenden Erfindung angegeben sind, sind die Untergrenzen und die Obergrenzen der verschiedenen Bereiche in Bezug auf die jeweilige Angabe und/oder auf die jeweilige Definition miteinander kombinierbar.

Bevorzugt werden tierische Nebenprodukte getrocknet und gepresst, bevor diese zerkleinert werden, wobei Agglomerate gebildet werden. Die Trocknung wird bevorzugt bei Temperatur in einem Bereich zwischen etwa 50 °C und etwa 300°C, weiter bevorzugt bei einem Bereich zwischen etwa 50 °C und etwa 200°C, besonders bevorzugt bei einem Bereich zwischen etwa 100 °C und etwa 150°C, durchgeführt. Bevorzugt kann die Temperatur bei einer mehrstufigen Trocknung für eine jede Stufe angepasst werden und insbesondere auch in einer jeden Stufe unterschiedlich sein. Die Trocknung dauert bevorzugt zwischen etwa 30 min und etwa 300 min, weiter bevorzugt zwischen etwa 60 min und etwa 240 min, besonders bevorzugt zwischen etwa 90 min und etwa 180 min. Die Pressung wird bevorzugt bei einem Druck in einem Bereich zwischen etwa 1 x 10⁷ Pa und etwa 3,5 x 10⁷ Pa, weiter bevorzugt bei einem Bereich zwischen etwa 1,5 x 10⁷ Pa und etwa 2,5 x 10⁷ Pa, besonders bevorzugt bei einem Bereich zwischen etwa 1,8 x 10⁷ Pa und etwa 2,2 x 10⁷ Pa, durchgeführt. Die Pressung dauert bevorzugt zwischen etwa 10 min und etwa 300 min, weiter bevorzugt zwischen etwa 10 min und etwa 60 min. Bevorzugt weisen die Tierrest-Agglomerate vor der Zerkleinerung eine Größe in einem Bereich von etwa 200 mm x 100 mm x 20 mm bis etwa 300 mm x200 mm x 30 mm, weiter bevorzugt von etwa 220 mm x 120 mm x 22 mm bis etwa 280 mm x180 mm x 28 mm, weiter bevorzugt von etwa 240 mm x 140 mm x 24 mm bis etwa 260 mm x160 mm x 26 mm.

Erfindungsgemäß werden die Agglomerate mindestens durch Einbringung einer Vorspannungskraft und Aussetzung einer ersten Scherkraft zerkleinert. Bevorzugt liegt die eingebrachte Vorspannungskraft in einem Bereich von etwa 200 N bis etwa 2000 N, weiter bevorzugt in einem Bereich von etwa 500 N bis etwa 1800 N, besonders bevorzugt in einem Bereich von etwa 700 N bis etwa 1600 N. Bevorzugt liegt die ausgesetzte erste Scherkraft in einem Bereich von etwa 500 N bis etwa 2000 N. Bevorzugt wird die eingebrachte Vorspannungskraft eingestellt. Bevorzugt ist die erste Scherkraft proportional zu der eingebrachten Vorspannungskraft. Je höher die eingebrachte Vorspannungskraft ist, desto höher ist auch die erste Scherkraft. Bevorzugt wird durch die Zerkleinerung der Agglomerate mindestens durch Einbringung einer Vorspannungskraft und Aussetzung einer ersten Scherkraft eine erhöhte Oberfläche der Agglomerate zur Verfügung gestellt. Bevorzugt weisen die mindestens durch Einbringung der Vorspannungskraft und Aussetzung der ersten Scherkraft entstandenen Produkte eine mittlere Korngröße in einem Bereich zwischen etwa 10 mm bis etwa 30 mm, weiter bevorzugt zwischen etwa 12 mm und etwa 25 mm, besonders bevorzugt zwischen etwa 15 mm und etwa 20 mm auf. Die mittlere Korngröße wird im Sinne der vorliegenden Erfindung durch eine gestaffelte Siebung bestimmt, wobei ein Korngrößenspektrum ermittelt und hieraus ein Mittelwert berechnet wird.

Erfindungsgemäß werden die mindestens durch Einbringung der Vorspannungskraft und Aussetzung der ersten Scherkraft zerkleinerten Agglomerate einer zweiten Scherkraft ausgesetzt. Bevorzugt liegt die ausgesetzte zweite Scherkraft in einem Bereich von etwa 10 N bis etwa 200 N, weiter bevorzugt zwischen etwa 20 N bis etwa 150 N, besonders bevorzugt zwischen etwa 30 N bis etwa 100 N. Bevorzugt dient die Aussetzung einer zweiten Scherkraft zur Anreicherung des Proteingehaltes der zerkleinerten Agglomerate. Bevorzugt werden durch die Aussetzung einer zweiten Scherkraft die zerkleinerten Agglomerate fraktionierbar derart, dass die zerkleinerten Agglomerate in unterschiedliche Fraktionen aufteilbar sind. Weiter bevorzugt werden durch die Aussetzung einer zweiten Scherkraft die zerkleinerten Agglomerate fraktioniert derart, dass mindestens eine erste Fraktion zur Verfügung gestellt wird, die einen angereicherten Proteingehalt aufweist und mindestens eine zweite Fraktion zur Verfügung gestellt wird, die einen abgereicherten Proteingehalt aufweist.

Bevorzugt weisen die mindestens durch Einbringung der Vorspannungskraft, die Aussetzung der ersten Scherkraft und die Aussetzung der zweiten Scherkraft entstandenen Produkte eine mittlere Korngröße in einem Bereich zwischen etwa 0,2 mm bis etwa 15 mm, weiter bevorzugt zwischen etwa 0,5 mm und etwa 12 mm, besonders bevorzugt zwischen etwa 1 mm und etwa 10 mm auf.

Bevorzugt werden die mindestens durch Einbringung der Vorspannungskraft, Aussetzung der ersten Scherkraft und Aussetzung der zweiten Scherkraft entstandenen Produkte sortiert und/oder klassiert. Ein Sortieren und/oder Klassieren dient zur Trennung der erhaltenen Fraktionen, die durch durch Einbringung der Vorspannungskraft, Aussetzung der ersten Scherkraft und Aussetzung der zweiten Scherkraft zur Verfügung gestellt werden. Geeignet sind übliche Klassier- und Sortierverfahren wie Sieben, Sichten oder ähnliche Verfahren, die eine Trennung von stückigem Material nach Materialeigenschaften wie zum Beispiel Dichte und Größe ermöglichen. Bevorzugt werden die mindestens durch Einbringung der Vorspannungskraft, Aussetzung der ersten Scherkraft und Aussetzung der zweiten Scherkraft entstandenen Produkte gesiebt und/oder gesichtet. Weiter bevorzugt werden die mindestens durch Einbringung der Vorspannungskraft, Aussetzung der ersten Scherkraft und Aussetzung der zweiten Scherkraft entstandenen Produkte gesiebt.

Bevorzugt weist das mindestens durch Einbringung der Vorspannungskraft und Aussetzung der ersten Scherkraft entstandene zerkleinerte Agglomerat einen Proteinanteil in einem Bereich zwischen etwa 45 Gew.-% bis etwa 50 Gew.-%, weiter bevorzugt zwischen etwa 46 Gew.-% bis etwa 49 Gew.-%, besonders bevorzugt zwischen etwa 47 Gew.-% bis etwa 48 Gew.-%, jeweils bezogen auf die gesamte Menge des zerkleinerten Agglomerats, auf.

Bevorzugt weist ein nach dem Sieben erhaltener Siebdurchgang einen Proteinanteil in einem Bereich zwischen etwa 50 Gew.-% bis etwa 60 Gew.-%, weiter bevorzugt zwischen etwa 52 Gew.-% bis etwa 58 Gew.-%, besonders bevorzugt zwischen etwa 54 Gew.-% bis etwa 56 Gew.-%, jeweils bezogen auf die gesamte Menge des Siebdurchgangs, auf.

Bevorzugt weist ein nach dem Sieben erhaltener Siebrückstand einen mineralischen Anteil in einem Bereich zwischen etwa 40 Gew.-% bis etwa 48 Gew.-%, weiter bevorzugt zwischen etwa 43 Gew.-% bis etwa 46 Gew.-%, besonders bevorzugt zwischen etwa 44 Gew.-% bis etwa 46 Gew.-%, jeweils bezogen auf die gesamte Menge des Siebrückstandes, auf.

Bevorzugt weist der Siebdurchgang eine Menge in einem Bereich zwischen etwa 20 Gew.-% bis etwa 60 Gew.-%, weiter bevorzugt in einem Bereich von etwa 25 Gew.-% bis etwa 55 Gew.-%, besonders bevorzugt von etwa 28 Gew.-% bis etwa 52 Gew.-%, jeweils bezogen auf die gesamte Menge der zerkleinerten Agglomerate, auf. Bevorzugt weist der Siebrückstand eine Menge in einem Bereich zwischen etwa 40 Gew.-% bis etwa 80 Gew.-%, weiter bevorzugt in einem Bereich von etwa 45 Gew.-% bis etwa 75 Gew.-%, besonders bevorzugt von etwa 48 Gew.-% bis etwa 72 Gew.-%, jeweils bezogen auf die gesamte Menge der zerkleinerten Agglomerate, auf.

Nicht Teil der Erfindung ist eine Vorrichtung zur Durchführung eines Verfahrens, umfassend:
- ein erstes Mittel, mit welchem Agglomerate aus tierischen Nebenprodukten mindestens durch Einbringung einer Vorspannungskraft und Aussetzung einer ersten Scherkraft zerkleinerbar sind,
- ein zweites Mittel, mittels welchem Agglomerate einer zweiten Scherkraft aussetzbar sind.

Im Folgenden wird auf die verschiedenen Merkmale der Vorrichtung und der Verwendung der Vorrichtung wie oben im Zusammenhang mit dem Verfahren beschrieben eingegangen, das heißt es werden insbesondere die gleichen Begrifflichkeiten verwendet.

Bevorzugt ist das erste Mittel ausgewählt aus einer der Gruppe umfassend Zweiwellenbrecher und Einwellenbrecher mit Gegenbrücke. Hammermühlen sind keine geeigneten ersten Mittel im Sinne der vorliegenden Erfindung. Denn diese bringen im Wesentlichen nur Scherkräfte ein. Hammermühlen zerstören den mineralischen Anteil der Tierreste, daher ist die Trennung von Proteinanteil und mineralischen Anteil in den Tierresten durch Hammermühlen ineffizient.

Ein Zweiwellenbrecher ist eine Vorrichtung, die zwei drehbare und voneinander in definierten Abstand befindliche Wellen umfasst. Die Wellen drehen sich in entgegengesetzter Richtung. Die Wellen bringen einer Vorspannungskraft ein und setzen das durch dieses geführte Gut einer Scherkraft aus. Die Vorspannungskraft ist bevorzugt durch einstellbare Federn vorgegeben. Bevorzugt wird der Zweiwellenbrecher derart betrieben, dass die Wellen des Zweiwellenbrechers ausweichen, sobald eine spezifische Vorspannungskraft erreicht wird. Jede Welle bringt bevorzugt die Vorspannungskraft auf die Agglomerate in einer Richtung von der Mitte der einen Welle zur Mitte der anderen Welle ein. Die Wirkungsrichtung der Scherkraft ist bevorzugt die Drehrichtung der Welle gerichtet. Bevorzugt weisen die Wellen des Zweiwellenbrechers Zähne auf. Scherkräfte an Zweiwellenbrechern können auch durch aufgebrachte Zähne erzeugt werden. Die Größenordnung dieser Scherkräfte wird durch die Drehzahl der Wellen bestimmt. Mit dem Zweiwellenbrecher sind Agglomerate aus tierischen Nebenprodukten durch Einbringung von Vorspannungskräften und Aussetzung von Scherkräften zerkleinerbar. Durch die Zerkleinerung wird eine Erhöhung der Oberfläche der Agglomerate zur Verfügung gestellt. Die Einbringung der Vorspannungskraft und die Aussetzung der Scherkraft können sich auf verschiedene Bestandteile, die in den Agglomeraten umfasst sind, unterschiedlich auswirken. So ist es möglich, dass harte Bestandteile, wie zum Beispiel Knochenteile, im geringeren Ausmaß zerkleinert werden im Vergleich zu weicheren Bestandteilen wie Muskelteilen, welche im höheren Ausmaß zerkleinert werden. Bevorzugt wird der Zweiwellenbrecher derart betrieben, dass die Wellen des Zweiwellen-brechers ausweichen, sobald eine spezifische Vorspannungskraft erreicht wird, so dass harte Bestandteilen wie zum Beispiel Knochenteilen vorzugsweise geringer verkleinert werden als weiche Bestandteile wie Muskelteile. Weiter bevorzugt wird der Zweiwellenbrecher derart betrieben, dass weiche Bestandteile vorzugsweise feiner zerkleinert werden.

Bevorzugt weist der Zweiwellenbrecher ein Spaltmaß in einem Bereich zwischen etwa 5 mm bis etwa 15 mm, weiter bevorzugt zwischen etwa 7 mm bis etwa 13 mm, besonders bevorzugt zwischen etwa 8 mm bis etwa 12 mm auf.

Bevorzugt ist das zweite Mittel ausgewählt in der Gruppe umfassend Kugelmühlen, Drehsiebe und Schwingsiebe. Bevorzugt werden zerkleinerte Agglomerate in dem zweiten Mittel einer zweiten Scherkraft ausgesetzt derart, dass eine Anreicherung des Proteingehaltes der zerkleinerten Agglomerate ermöglicht wird. Bevorzugt werden durch die Aussetzung einer zweiten Scherkraft in dem zweiten Mittel die zerkleinerten Agglomerate fraktioniert derart, dass die zerkleinerten Agglomerate in unterschiedliche Fraktionen aufteilbar sind. Weiter bevorzugt werden durch die Aussetzung einer zweiten Scherkraft in dem zweiten Mittel die zerkleinerten Agglomerate fraktioniert derart, dass mindestens eine erste Fraktion zur Verfügung gestellt wird, die einen angereicherten Proteingehalt aufweist und mindestens eine zweite Fraktion zur Verfügung gestellt wird, die einen abgereicherten Proteingehalt aufweist.

In einer Ausführungsform trennt das zweite Mittel die mindestens durch Einbringung der Vorspannungskraft, die Aussetzung der ersten Scherkraft und die Aussetzung der durch das zweite Mittel erzeugten zweiten Scherkraft entstandenen Produkte vorzugsweise nach mittlerer Korngröße. Bevorzugt weist das zweite Mittel eine Maschenweite in einem Bereich zwischen etwa 1 mm und etwa 10 mm, weiter bevorzugt zwischen 1,5 mm und 8 mm, besonders bevorzugt zwischen etwa 2 mm und 4 mm auf.

In einer anderen Ausführungsform umfasst die Vorrichtung weiterhin mindestens ein drittes Mittel zum Sortieren und/oder Klassieren. Bevorzugt wird das dritte Mittel ausgewählt aus einer Gruppe umfassend Siebanlagen, Sichtern, Zyklonen und/oder Hydrozklonen. Das dritte Mittel ist weiter bevorzugt ein Filtersieb. Bevorzugt weist das dritte Mittel eine Maschenweite in einem Bereich zwischen etwa 1 mm und etwa 10 mm, weiter bevorzugt zwischen 2 mm und 8 mm, besonders bevorzugt zwischen etwa 3 mm und 7 mm auf. Das dritte Mittel fraktioniert nach Korngröße die mindestens durch Einbringung der Vorspannungskraft, die Aussetzung der ersten Scherkraft und die Aussetzung der zweiten Scherkraft entstandenen Produkte, vorzugsweise nach mittlerer Korngröße. Bevorzugt wird keine Scherkraft in dem dritten Mittel eingesetzt. Weiter bevorzugt dient das dritte Mittel ausschlich zur Fraktionierung. Weiter bevorzugt wird das dritte Mittel eingesetzt, wenn das zweite Mittel eine Kugelmühle ist.

Bevorzugt umfasst die Vorrichtung weiterhin mindestens einen Trockner und/oder mindestens eine Presse zur Trocknung und Pressung von tierischen Nebenprodukten zur Bildung von Agglomeraten. Der mindestens eine Trockner und/oder die mindestens eine Presse sind vor dem ersten Mittel, insbesondere einem Zweiwellenbrecher, angeordnet.

Nicht Teil der Erfindung ist eine Verwendung einer Vorrichtung zur Verwertung von tierischen Nebenprodukten.

Ein beispielhaftes Verfahren zur Verwertung von tierischen Nebenprodukten, in Form von Agglomeraten, ist ein solches, bei dem
- tierische Nebenprodukte getrocknet und gepresst werden, wobei die Agglomerate gebildet werden,
- die Agglomerate mindestens durch Einbringung einer Vorspannungskraft und Aussetzung einer ersten Scherkraft zerkleinert werden,
- die zerkleinerten Agglomerate einer zweiten Scherkraft ausgesetzt werden,
- , wobei die Proteinfraktion der tierischen Nebenprodukte angereichert und Mineralfraktion der tierischen Nebenprodukte abgereichert wird.

Ein weiteres beispielhaftes Verfahren zur Verwertung von tierischen Nebenprodukten, in Form von Agglomeraten, ist ein solches, bei dem
- die Agglomerate mindestens durch Einbringung einer Vorspannungskraft und Aussetzung einer ersten Scherkraft zerkleinert werden,
- die zerkleinerten Agglomerate einer zweiten Scherkraft ausgesetzt wer-den,
- die eingebrachte Vorspannungskraft in einem Bereich von etwa 200 N bis etwa 2000 N liegt.

Ein weiteres beispielhaftes Verfahren zur Verwertung von tierischen Nebenprodukten, in Form von Agglomeraten, ist ein solches, bei dem
- die Agglomerate mindestens durch Einbringung einer Vorspannungskraft und Aussetzung einer ersten Scherkraft zerkleinert werden,
- die zerkleinerten Agglomerate einer zweiten Scherkraft ausgesetzt werden,
- die ausgesetzte erste Scherkraft in einem Bereich von etwa 200 N bis etwa 2000 N liegt.

Ein weiteres beispielhaftes Verfahren zur Verwertung von tierischen Nebenprodukten, in Form von Agglomeraten, ist ein solches, bei dem
- die Agglomerate mindestens durch Einbringung einer Vorspannungskraft und Aussetzung einer ersten Scherkraft zerkleinert werden,
- die zerkleinerten Agglomerate einer zweiten Scherkraft ausgesetzt werden,
- die ausgesetzte zweite Scherkraft in einem Bereich von etwa 10 N bis etwa 200 N liegt.

Ein weiteres beispielhaftes Verfahren zur Verwertung von tierischen Nebenprodukten, in Form von Agglomeraten, ist ein solches, bei dem
- die Agglomerate mindestens durch Einbringung einer Vorspannungskraft und Aussetzung einer ersten Scherkraft zerkleinert werden,
- die zerkleinerten Agglomerate einer zweiten Scherkraft ausgesetzt werden,
- mindestens durch Einbringung der Vorspannungskraft, Aussetzung der ersten Scherkraft und Aussetzung der zweiten Scherkraft entstandenen Produkte gesiebt werden.

Ein weiteres beispielhaftes Verfahren zur Verwertung von tierischen Nebenprodukten, in Form von Agglomeraten, ist ein solches, bei dem
- die Agglomerate mindestens durch Einbringung einer Vorspannungskraft und Aussetzung einer ersten Scherkraft zerkleinert werden,
- die zerkleinerten Agglomerate einer zweiten Scherkraft ausgesetzt werden,
- die eingebrachte Vorspannungskraft in einem Bereich von etwa 200 N bis etwa 2000 N liegt,
- die ausgesetzte erste Scherkraft in einem Bereich von etwa200 N bis etwa 2000 N liegt,
- die ausgesetzte zweite Scherkraft in einem Bereich von etwa 10 N bis etwa 200 N liegt.

In den vorstehenden bevorzugten Ausführungsformen der Erfindung handelt es sich um nicht einschränkende, gleichwohl bevorzugte Beispiele. Auch eine Kombination der genannten Bereiche und Komponenten einer jeden Ausführungsform mit einer anderen oder mehreren anderen Ausführungsformen untereinander ist möglich.

Anhand der folgenden Ausführungsbeispiele wird die vorliegende Erfindung näher erläutert.

In einem ersten Beispiel wurden Tierreste in einem Trockener getrocknet. Die Trocknung erfolgte bei einer Temperatur von 125°C. Die Trocknung dauerte 120 min. Nach der Trocknung wurden die Tierreste in einer Presse gepresst. Die Pressung erfolgte bei einem Druck von 2 x 10⁷ Pa. Die Pressung dauerte 60 min. Durch die Trocknung und Pressung wurden Agglomerate gebildet. Agglomerate vor der Zerkleinerung wiesen eine mittlere Korngröße von 250 mm x 150mm x 25 mm auf. Die Agglomerate wurden einem Zweiwellenbrecher mit einem Spaltmaß von etwa 12 mm zugeführt. In dem Zweiwellenbrecher wurden die Agglomerate durch Einbringung einer Vorspannungskraft und Aussetzung einer ersten Scherkraft zerkleinert. Die Vorspannungskraft lag bei etwa 1000 N. Die erste Scherkraft betrug etwa 800 N. Durch Einbringung der Vorspannungskraft und Aussetzung der ersten Scherkraft wurden die Agglomerate zerkleinert. Die solchermaßen zerkleinerten Agglomerate wiesen eine mittlere Korngröße zwischen etwa 15 mm und 20 mm auf. Der Proteinanteil in den zerkleinerten Agglomeraten betrug 47,5 Gew.-%, bezogen auf die gesamte Masse der zerkleinerten Agglomerate. Der Proteingehalt wurde bestimmt mittels der BCA-Methode, einer biochemischen Methode unter Verwendung von Bicinchoninsäure (BCA). Die zerkleinerten Agglomerate wurden einer Kugelmühle zugeführt, in der die zerkleinerten Agglomerate einer zweiten Scherkraft ausgesetzt wurden. Die zweite Scherkraft betrug etwa 120 N. Durch Aussetzung der zweiten Scherkraft wurden mit der Kugelmühle die zerkleinerten Agglomerate fraktioniert derart, dass eine erste Fraktion der zerkleinerten Agglomerate gebildet wurde mit angereichertem Proteinanteil und eine zweite Fraktion der zerkleinerten Agglomerate mit abgereichertem Proteinanteil. Die solchermaßen erhaltenen Produkte wurden in einem Sieb mit einer Maschenweite von 2 mm gesiebt. Nach dem Sieben blieb ein Siebrückstand zurück und ein Siebdurchgang erhalten. Der Siebdurchgang wies einen Proteinanteil von etwa 52 %, wobei der Proteinanteil bezogen ist auf die gesamte Menge des Siebdurchgangs, auf. Der Siebdurchgang wurde beispielsweise für Haustiernahrung verwendet. Der Siebdurchgang wies einen höheren Proteinanteil als der Siebrückstand auf. Der Siebrückstand wies einen Mineralanteil von 40%, bezogen auf die gesamte Menge des Siebrückstands auf. Der Siebdurchgang betrug 40 Gew.-%, bezogen auf die gesamte Menge der zerkleinerten Agglomerate. Der Siebrückstand betrug 60 Gew.-%, bezogen auf die gesamte Menge der zerkleinerten Agglomerate. Der Siebrückstand wurde einer Hammermühle zugeführt und aus diesem ein handelsfähiges Produkt erhalten, was beispielsweise in der Nutztierfütterung aber auch Pet Food verwendet werden kann. Der Siebdurchgang wurde einer zweiten Hammermühle zugeführt und ebenfalls der Nutztierfütterung aber mit minderer Qualität bewertet.

In einem zweiten Beispiel wurden Tierreste in einem Trockener getrocknet. Die Trocknung erfolgte bei einer Temperatur von 120°C. Die Trocknung dauerte 150 min. Nach der Trocknung wurden die Tierreste in einer Presse gepresst. Die Pressung erfolgte bei einem Druck von 2 x 10⁷ Pa. Die Pressung dauerte 150min. Durch die Trocknung und Pressung wurden Agglomerate gebildet. Agglomerate vor der Zerkleinerung wiesen eine mittlere Korngröße von 250 mm x 150mm x 25 mm auf. Die Agglomerate wurden einem Zweiwellenbrecher mit einem Spaltmaß von etwa 11 mm zugeführt. In dem Zweiwellenbrecher wurden die Agglomerate durch Einbringung einer Vorspannungskraft und Aussetzung einer ersten Scherkraft zerkleinert. Die Vorspannungskraft lag bei etwa 1000 N. Die erste Scherkraft betrug etwa 800 N. Durch Einbringung der Vorspannungskraft und Aussetzung der ersten Scherkraft wurden die Agglomerate zerkleinert. Die solchermaßen zerkleinerten Agglomerate wiesen eine Korngröße zwischen etwa 18 mm auf. Der Proteinanteil in den zerkleinerten Agglomeraten betrug 46 Gew.-%, bezogen auf die gesamte Masse der zerkleinerten Agglomerate. Der Proteingehalt wurde bestimmt mittels der BCA-Methode, einer biochemischen Methode unter Verwendung von Bicinchoninsäure (BCA). Die zerkleinerten Agglomerate wurden einer Drehsieb zugeführt, in dem die zerkleinerten Agglomerate einer zweiten Scherkraft ausgesetzt wurden. Die zweite Scherkraft lag bei etwa 10 N vor. Durch Aussetzung der zweiten Scherkraft wurde mit dem Drehsieb Proteinanteile der zerkleinerten Agglomerate angereichert derart, dass eine erste Fraktion mit angereichertem Proteingehalt und eine zweite Fraktion mit abgereichertem Proteingehalt gebildet wurden. Das Drehsieb wies eine Maschenweite von etwa 3 mm auf. Der Siebdurchgang wies einen Proteinanteil von etwa 58 Gew.-%, bezogen auf die gesamte Menge des Siebdurchgangs, auf. Der Siebdurchgang wies einen höheren Proteinanteil als der Siebrückstand auf. Der Siebrückstand wies einen mineralischen Anteil von etwa 58 Gew.-%, bezogen auf die gesamte Menge des Siebrückstands, auf. Der Siebdurchgang betrug 30 Gew.-%, bezogen auf die gesamte Menge der zerkleinerten Agglomerate. Der Siebrückstand betrug 70 Gew.-%, bezogen auf die gesamte Menge der zerkleinerten Agglomerate.

In einem dritten Beispiel wurden Tierreste in einem Trockener getrocknet. Die Trocknung erfolgte bei einer Temperatur von 125°C. Die Trocknung dauerte 150 min. Nach der Trocknung wurden die Tierreste in einer Presse gepresst. Die Pressung erfolgte bei einem Druck von 2 x 10⁷ Pa Die Pressung dauerte 120 min. Durch die Trocknung und Pressung wurden Agglomeraten gebildet. Agglomerate vor der Zerkleinerung wiesen eine mittlere Korngröße von 250 mm x 150mm x 25 mm auf. Die Agglomerate wurden einem Zweiwellenbrecher mit einem Spaltmaß von etwa 6 mm zugeführt. In dem Zweiwellenbrecher wurden die Agglomerate durch Einbringung einer Vorspannungskraft und Aussetzung einer ersten Scherkraft zerkleinert. Die Vorspannungskraft lag bei etwa 1000 N. Die erste Scherkraft betrug etwa 800 N. Durch Einbringung der Vorspannungskraft und Aussetzung der ersten Scherkraft wurden die Agglomerate zerkleinert. Die solchermaßen zerkleinerten Agglomerate wiesen eine mittlere Korngröße zwischen etwa 8 mm auf. Der Proteinanteil in den zerkleinerten Agglomeraten betrug 45,5 Gew.-%, bezogen auf die gesamte Masse der zerkleinerten Agglomerate. Der Proteingehalt wurde bestimmt mittels der BCA-Methode, einer biochemischen Methode unter Verwendung von Bicinchoninsäure (BCA). Die zerkleinerten Agglomerate wurden einem Schwingsieb zugeführt, in der die zerkleinerten Agglomerate einer zweiten Scherkraft ausgesetzt wurden. Die zweite Scherkraft lag bei etwa 100 N vor. Durch Aussetzung der zweiten Scherkraft wurden mit dem Schwingsieb Proteinanteile der zerkleinerten Agglomerate angereichert derart, dass eine erste Fraktion mit angereichertem Proteingehalt und eine zweite Fraktion mit abgereichertem Proteingehalt gebildet wurden. Das Schwingsieb wies eine Maschenweite von etwa 1 mm auf. Der Siebdurchgang wies einen Proteinanteil von etwa 59 Gew.-%, bezogen auf die gesamte Menge des Siebdurchgangs, auf. Der Siebdurchgang wies einen höheren Proteinanteil als der Siebrückstand auf. Der Siebrückstand wies einen mineralischen Anteil von etwa 55 Gew.-%, bezogen auf die gesamte Menge des Siebrückstands, auf. Der Siebdurchgang betrug 52 Gew.-%, bezogen auf die gesamte Menge der zerkleinerten Agglomerate. Der Siebrückstand betrug 48 Gew.-%, bezogen auf die gesamte Menge der zerkleinerten Agglomerate.

## Patentansprüche

1. Verfahren zur Verwertung von tierischen Nebenprodukten, wobei
- tierische Nebenprodukte getrocknet und gepresst werden, wobei Agglomerate gebildet werden,
- die Agglomerate mindestens durch Einbringung einer Vorspannungskraft und Aussetzung einer ersten Scherkraft zerkleinert werden,
- die zerkleinerten Agglomerate einer zweiten Scherkraft ausgesetzt werden.

2. Verfahren gemäß Anspruch 1, **dadurch gekennzeichnet, dass** mindestens durch Einbringung der Vorspannungskraft, Aussetzung der ersten Scherkraft und Aussetzung der zweiten Scherkraft entstandenen Produkte gesiebt werden.

3. Verfahren gemäß einem oder mehreren der vorangegangenen Ansprüche, **dadurch gekennzeichnet, dass** die eingebrachte Vorspannungskraft in einem Bereich von etwa 200 N bis etwa 2000 N vorliegt.

4. Verfahren gemäß einem oder mehreren der vorangegangenen Ansprüche, **dadurch gekennzeichnet, dass** die ausgesetzte erste Scherkraft in einem Bereich von etwa 200 N bis etwa 2000 N vorliegt.

5. Verfahren gemäß einem oder mehreren der vorangegangenen Ansprüche, **dadurch gekennzeichnet, dass** die ausgesetzte zweite Scherkraft in einem Bereich von etwa 10 N bis etwa 200 N vorliegt.

## Claims

1. Method for recycling animal by-products, wherein
- animal by-products are dried and pressed, whereby forming agglomerates,
- the agglomerates are comminuted by applying a preload force and exposing them t a first shear force,
- the comminuted agglomerates are exposed to a second shear force.

2. Method according to claim 1, **characterized in that** the products formed at least by the application of the preload force, exposure to the first shear force, and exposure to th second shear force are sieved.

3. Method according to one or more of the preceding claims, **characterized in that** the applied preload force is in a range of about 200 N to about 2000 N.

4. Method according to one or more of the preceding claims, **characterized in that** the applied first shear force is in a range of about 200 N to about 2000 N.

5. Method according to one or more of the preceding claims, **characterized in that** the applied second shear force is in a range of about 10 N to about 200 N.

## Revendications

1. Procédé destiné à valoriser des sous-produits animaux, dans lequel
- on sèche et presse les sous-produits animaux, des agglomérats étant formés,
- on broie les agglomérats au moins en appliquant une force de précontrainte et en les soumettant à une première force de cisaillement,
- on soumet à une seconde force de cisaillement les agglomérats broyés.

2. Procédé selon la revendication 1, **caractérisé en ce qu'**on tamise les produits obtenus au moins grâce à l'application de la force de précontrainte et à leur soumission à la première force de cisaillement et à la seconde force de cisaillement.

3. Procédé selon l'une ou plusieurs des revendications précédentes, **caractérisé en ce que** la force de précontrainte appliquée est comprise dans une plage d'environ 200 N à environ 2 000 N.

4. Procédé selon l'une ou plusieurs des revendications précédentes, **caractérisé en ce que** la première force de cisaillement soumise est comprise dans une plage d'environ 200 N à environ 2 000 N.

5. Procédé selon l'une ou plusieurs des revendications précédentes, **caractérisé en ce que** la seconde force de cisaillement soumise est comprise dans une plage d'environ 10 N à environ 200 N.
